# EUROPÄISCHE PATENTSCHRIFT

(11) **EP 0 372 161 B1**
(45) Veröffentlichungstag und Bekanntmachung des Hinweises auf die Patenterteilung: **17.03.1993**
(21) Anmeldenummer: 89113125.2
(22) Anmeldetag: 18.07.1989
(51) Int. Cl.: A47C 11/00, A47C 5/12, B29C 37/00, B29C 67/18

(54) **Gartenbankbohle aus Kunststoff, insbesondere aus Recycling-Kunststoff**
Plastic slat for a garden bench, particularly a recycled plastics slat
Latte en matière plastique pour banc de jardin, notamment en matière plastique recyclée

(30) Priorität: 01.12.1988 DE 3840508
(43) Veröffentlichungstag der Anmeldung: 13.06.1990
(73) Patentinhaber: Dr. Spiess Kunststoff-Recycling GmbH & Co., D-67271 Kleinkarlbach (DE)
(72) Erfinder: Rydmann, Theo, D-6719 Hettenleidelheim (DE); Bürcky, Walter, D-6719 Bolanden (DE)

(56) Entgegenhaltungen:
- DE-A- 3 607 158
- LU-A- 82 944

## Beschreibung

Die Erfindung betrifft eine Gartenbankbohle nach dem Oberbegriff des Anspruchs 1, gemäß DE-A-3 607 158.

Es sind andere Gartenbankbohlen mit einer Vierkantarmierung bekannt. Diese Gartenbankbohlen sind an den Enden offen und werden anschließend durch je eine separate Kunststoffkappe verschlossen.Bei aus Recycling-Kunststoff bestehenden Gartenbankbohlen ist diese Methode jedoch nicht anwendbar, weil die Randkanten der Enden der Gartenbankbohle nicht scharfkantig ausfallen. Auch mit einer eventuellen Nachbearbeitung läßt sich kein sauberer Übergang zwischen Gartenbankbohle und Abschlußkappe erzielen. Außerdem besteht die Gefahr, daß durch einsickernde Feuchtigkeit ein Anrosten der Armierung nicht vermieden werden kann. Um diesem vorzubeugen, werden die Gartenbankbohlen während der kalten Jahreszeit in der Regel abgebaut und eingelagert. Sie werden erst wieder im Frühjahr montiert. Diese Arbeiten erfordern viel Zeit und sind teuer. Darüberhinaus können die Abschlußkappen abfallen und verlorengehen.

In der LU-829 44 ist eine mit Kunststoff ummantelte Versteifungsstrebe für Automobilteile offenbart. Auch in dieser Schrift wird das gleiche Problem, nämlich die ungleichen Schrumpfspannungen zwischen der Versteifungsstrebe und der Kunststoffummantelung auszugleichen,behandelt. Hierbei ist an Knotenpunkten der Versteifungsstrebe bzw. auch bei längeren Strecken der Ummantelung eine Unterbrechung in der Kunststoffummantelung vorgesehen, welche durch eine schmale Kunststofflasche aus dem gleichen Material überbrückt ist. Diese Überbrückung kann zwar Spannungen aufnehmen und durch Ausbiegen bzw. Ausbauchen kompensieren. An diesen Überbrückungsstellen ist die Ummantelung jedoch nicht vollkommen, die Versteifungsstrebe ist nur zum Teil im Kunststoff eingebettet und sie ist an diesen Stellen bzw. Abschnitten nicht gegen Korrosion geschützt.

Versuche, die Enden der Gartenbankbohle schon bei der Ummantelung der Armierung in einem Arbeitsgang zu verschließen, haben zu keinem Erfolg geführt. Die Schrumpfspannungen verziehen die Gartenbankbohle kreisförmig, wobei die Kunststoffummantelung der Gartenbankbohle ganz einfach in der Mitte zerreißt. Dieses Zerreissen tritt in der Regel erst dann auf, wenn die Gartenbankbohlen montiert und längere Zeit den Witterungseinflüssen ausgesetzt sind.

Aufgäbe der Erfindung ist es, eine Gartenbankbohle der eingangs genannten Art so zu verbessern, daß sich der Schrumpfungsprozeß um die starre Armierung vollziehen kann, ohne daß die Ummantelung zerreißt oder die Gartenbankbohle nach dem Abkühlen sich infolge der Schrumpfspannungen verzieht.

Diese Aufgabe wird durch den kennzeichnenden Teil des Anspruchs 1 gelöst. Durch die an beiden Enden der Gartenbankbohle angeordneten, aus der starren Armierung um einen bestimmten Betrag herausragenden, jedoch in der Armierung axialverschiebbaren Materialblöcken, ist eine Knautsch- bzw. Kompensationszone zum Abbau auftretender Schrumpfspannungen geschaffen. Der Schrumpfungsprozeß der Kunststoffummantelung kann sich dadurch unter normalen Verhältnissen vollziehen und wird nicht durch die starre Armierung gestört. Die beiden Kompensationszonen an den Enden der Gartenbankbohle verhindern zuverlässig Spannungsrisse oder ein Verwerfen der vorgegebenen Form. Die auftretenden Schrumpfspannungen schieben die beiden Materialblöcke in die Armierung hinein, die Gartenbankbohle verkürzt sich zum Ausgleich der durch den Abkühlungsprozeß auftretenden Schrumpfspannungen.

In weiterer Ausgestaltung der Erfindung kann das die Armierung bildende Rohr als Vierkantrohr ausgebildet sein. Ein Vierkantrohr entspricht den äußeren Umrissen einer herkömmlichen Gartenbankbohle und hat ein hohes Widerstandsmoment bei geringem Materialaufwand.

Darüberhinaus kann der Materialblock aus Holz oder einem anderen geeigneten, bei Kunststoffschmelztemperatur nicht schmelzenden Material bestehen.

Anhand eines in der Zeichnung dargestellten Ausführungsbeispieles soll die Erfindung näher erläutert werden.

Es zeigen:

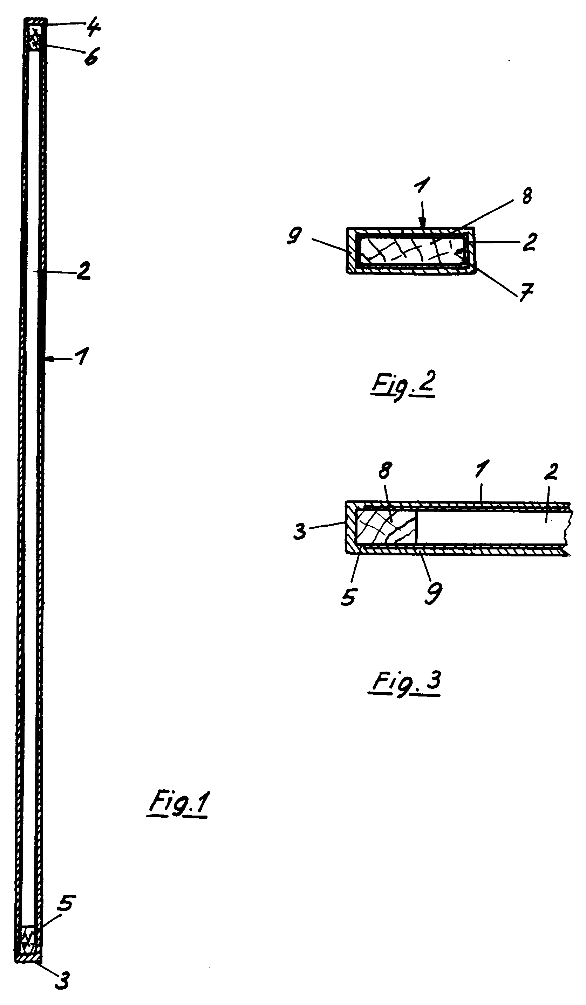

Fig. 1 einen Längsschnitt durch eine Gartenbankbohle gemäß der Erfindung,
Fig. 2 einen Querschnitt durch eine Gartenbankbohle und
Fig. 3 einen Teilschnitt durch eine Gartenbankbohle in Längsrichtung im größeren Maßstab.

Die in den Fig. dargestellte Gartenbankbohle 1 ist mit einer Armierung 2, die aus einem Vierkantrohr besteht, ausgestattet. In den längsseitigen Enden 3 und 4 der Armierung 2 sind Materialblöcke 8 eingesteckt, die als Knautsch- bzw. als Kompensationszonen 5 und 6 dienen. Der an den Enden 3 und 4 der Gartenbankbohle 1 angeordnete abschließende Kunststoffmantel 9 umhüllt die Materialblöcke 8 und die Armierung 2 gänzlich, so daß keine Feuchtigkeit die Armierung durch Rost zerstören kann. Beim Abkühlen einer frisch gefertigten Gartenbankbohle 1 kann der Schrumpfungsprozeß zwischen der starren Armierung 2 und der stärker schrumpfenden Ummantelung 9 ungestört ablaufen, weil die schrumpfende Kunststoffummantelung die Materialblöcke 8 in die Enden 3 und 4 der aus einem Rohr 7 bestehenden Armierung 2 fortschreitend hineinschieben kann, in dem Maße, wie der Schrumpfungsprozeß abläuft. Die im Querschnitt, senkrecht zur Längsachse auftretenden Spannungsunterschiede sind vernachlässigbar klein und stellen kein Problem dar. Durch die Knautsch- bzw. Kompensationszonen 5 und 6 wird das Verwerfen gefertigter Gartenbankbohlen 1 nicht nur vermieden, sondern es wird auch ein Zerreißen der Kunststoffummantelung zuverlässig vermieden.

Die die Knautsch- bzw. Kompensationszonen 5 und 6 bildenden Materialblöcke 8 können der Einfacheit halber aus Holz bestehen. Selbstverstzändlich kann hierzu auch jedes andere geeignete Material verwendet werden, ohne daß der Rahmen der Erfindung überschritten wird. Die mit einer Knautsch- bzw. Kompensationszone 5, 6 gefertigten Gartenbankbohlen 1 brauchen nicht nachgepreßt zu werden, um etwaiges Verwerfen derselben zu korrigierten.

## Patentansprüche

1. Gartenbankbohle, bestehend aus einer Armierung und einer die Armierung gänzlich umschließender, einstückiger Ummantelung aus Kunststoff bzw. aus Recycling-Kunststoff, **dadurch gekennzeichnet,** daß
a) die Armierung (2) aus einem Rohr (7) besteht, daß
b) an den längsseitigen Enden (3,4) des Rohres (7) je eine Knautsch- bzw. Kompensationszone (5,6) angeordnet ist und daß
c) die Knautsch- bzw. Kompensationszone (5,6) aus je einem in den Enden (3,4) des Rohres (7) einsteckbaren, um einen bestimmten Betrag aus diesen herausragenden Materialblock (8) besteht.

2. Gartenbankbohle nach Anspruch 1, dadurch gekennzeichnet, daß das Rohr (7) als Vierkantrohr ausgebildet ist.

3. Gartenbankbohle nach einem der Ansprüche 1 oder 2,dadurch gekennzeichnet, daß der Materialblock (8) aus Holz besteht.

## Claims

1. Garden seat plank, consisting of one reinforcement and one single-piece casing of plastic or recycling plastic, which completely encloses the reinforcement, characterized by the fact that,
a) the reinforcement (2) consists of a tube (7), that
b) on each of the longitudinal ends (3, 4) of the tube (7) a crumple zone, or compensation zone (5, 6), is provided, and that
c) each crumple zone, or compensation zone (5, 6) consists of a block of material (8) which can be inserted into the tube (7) ends (3, 4), with a certain amount of it jutting out of these.

2. Garden seat plank in accordance with claim 1, characterized by the fact that the tube (7) is designed as rectangular tube.

3. Garden seat plank in accordance with one of the claims 1 or 2, characterized by the fact, that the block of material (8) is of wood.

## Revendications

1. Madriers pour bancs de jardin se composant d'une armature et d'une enveloppe en matière plastique - plastique de recyclage - enrobant entièrement et en un morceau, l'armement, et caractérisé par :
a) l'armature (2) composée d'un tube (7)
b) aux deux bouts (3,4) du tube est aménagée une zone de compression ou de compensation (5,6)
c) la zone de compression ou de compensation (5,6,) est formée par une quantité définie de ce bloc de matériau (8) faisant saillie et pouvant être branchée à l'une des extrémités (1,4) du tube (7)

2. Madriers pour bancs de jardin suivant la qualification 1, définis par le fait que le tube (7) est à quatre pans

3. Madriers pour bancs de jardin selon les qualifications 1 ou 2, définis par le fait que le bloc de matériau (8) est en bois.
